# FASCICULE DE BREVET EUROPEEN

(11) **EP 2 753 543 B1**
(45) Date de publication et mention de la délivrance du brevet: **10.05.2017**
(21) Numéro de dépôt: 12755884.9
(22) Date de dépôt: 07.09.2012
(51) Int. Cl.: B64C 25/26, B64C 25/62, B64C 25/20

(54) **DISPOSITIF D'ATTELAGE D'UN ACTIONNEUR DE MANOEUVRE D'UN ATTERRISSEUR D'AERONEF**
VORRICHTUNG ZUR KOPPLUNG EINES AKTUATORS ZUR STEUERUNG DES FAHRWERKS EINES FLUGZEUGS
DEVICE FOR COUPLING AN ACTUATOR FOR CONTROLLING THE LANDING GEAR OF AN AIRCRAFT

(30) Priorité: 09.09.2011 FR 1158049
(43) Date de publication de la demande: 16.07.2014
(73) Titulaire: Safran Landing Systems, 78140 Vélizy-Villacoublay (FR)
(72) Inventeur: BLANPAIN, Thierry, F-78140 Velizy Villacoublay (FR); DUCOS, Dominique, F-78140 Velizy Villacoublay (FR); CAMPBELL, Edouard, F-78140 Velizy Villacoublay (FR)
(74) Mandataire: Parzy, Benjamin Alain
(86) Numéro de dépôt international: PCT/EP2012/067563
(87) Numéro de publication internationale: WO 2013/034728

(56) Documents cités:
- DE-C- 729 167
- GB-A- 496 080

## Description

L'invention est relative à dispositif d'attelage d'un actionneur de manoeuvre d'un atterrisseur d'aéronef.

Des exemples de l'art antérieur sont fournis par les documents GB496080 ou DE729167.

### ARRIERE-PLAN TECHNOLOGIQUE DE L'INVENTION

Les atterrisseurs sont généralement montés articulés sur la structure de l'aéronef, par exemple par l'intermédiaire de deux rotules alignées montées sur l'aéronef pour recevoir des pivots solidaires de l'atterrisseur. Un organe de stabilisation appelé contrefiche permet, lorsque l'atterrisseur est déployé, de maintenir celui-ci en position déployée. La contrefiche est alors verrouillée en position et triangule l'atterrisseur pour empêcher celui-ci de pivoter autour de l'axe défini par les pivots.

Un actionneur de manoeuvre, en général un actionneur télescopique, est attelé entre la structure de l'aéronef et l'atterrisseur pour manoeuvrer celui-ci. En général, l'actionneur de manoeuvre est utilisé de façon active pour provoquer la remontée de l'atterrisseur vers sa position stockée, et est utilisé pour ralentir un mouvement de descente de l'atterrisseur vers sa position déployée.

On sait que lorsque l'atterrisseur est déployé, il subit des efforts dûs soit à la déformée en vol de la structure de l'aéronef, soit à des efforts venus du sol en raison du roulage de l'aéronef sur un aéroport.

Le vérin étant en général monté en parallèle de la contrefiche, il est susceptible de transmettre des efforts, auxquels il doit résister, et donc de solliciter ses attelages. Cependant, si l'actionneur n'est pas rigide lors de ces phases, comme c'est le cas par exemple d'un vérin hydraulique dont les chambres sont mises au retour une fois l'atterrisseur arrivé et verrouillé en position déployée, l'actionneur ne risque pas de transmettre d'efforts et ainsi solliciter de façon importante ses attelages.

Tel n'est cependant pas le cas d'un actionneur électromécanique irréversible, ou d'un actionneur électromécanique réversible à partir d'un certain effort et qui de plus présente une forte inertie interne. Un tel type d'actionneur peut présenter au moins transitoirement une raideur très élevée, de sorte qu'il constitue un chemin de passage d'efforts risquant de solliciter fortement ses attelages et ses composants internes.

### OBJET DE L'INVENTION

L'invention a pour objet de proposer un dispositif d'attelage d'un actionneur de manoeuvre d'atterrisseur d'aéronef compatible avec des remontées d'efforts par l'actionneur lors de phases dans lesquelles l'atterrisseur est déployé.

### BREVE DESCRIPTION DE L'INVENTION

L'invention a pour objet un dispositif d'attelage d'un actionneur de manoeuvre d'un atterrisseur d'aéronef à une structure d'aéronef comportant
- un levier ayant une première extrémité destinée à être articulée sur la structure de l'aéronef et une deuxième extrémité sur laquelle l'actionneur est articulé ;
- des moyens de précharge agissant sur le levier pour rappeler celui-ci vers une position de repos stable dans laquelle se trouve le levier en l'absence d'effort transitant par l'actionneur ;
- des moyens de butée pour définir au moins une position de travail du levier lorsque l'actionneur est activé.

Ainsi, lorsque l'actionneur est activé, par exemple pour remonter l'atterrisseur vers sa position stockée, l'effort de l'actionneur agit à l'encontre des moyens de précharge si nécessaire pour amener le levier vers sa position de travail, de sorte que l'actionneur est ainsi positivement positionné vis-à-vis de la structure de l'aéronef. Par contre, lorsque l'actionneur n'est pas activé, par exemple lorsque l'atterrisseur est verrouillé en position déployée, le levier agit comme un filtre en absorbant par son déplacement depuis la position de repos à l'encontre des moyens de précharge les éventuels retours d'efforts qui transiteraient par l'actionneur. La structure de l'aéronef ainsi que les attelages de l'actionneur sont ainsi préservés.

En quelque sorte, les moyens de précharge introduisent une souplesse empêchant la remontée d'efforts non désirés par l'actionneur, cette souplesse étant neutralisée par l'amenée du levier en butée lors d'une activation de l'actionneur.

### DESCRIPTION DES FIGURES

L'invention sera mieux comprise en référence aux figures des dessins annexés parmi lesquelles :
- la figure 1 est une vue schématique d'un dispositif d'attelage d'actionneur de manoeuvre d'atterrisseur à la structure d'un aéronef selon un premier mode particulier de réalisation de l'invention, illustré ici alors que l'actionneur est inactif. L'échelle n'a bien sûr pas été respectée, afin de mieux illustrer le dispositif ;
- la figure 2 est une vue schématique du dispositif de la figure 1, illustré alors que l'actionneur est actif ;
- la figure 3 est une vue schématique d'un dispositif selon un deuxième mode particulier de réalisation de l'invention.

### DESCRIPTION DETAILLEE DES FIGURES

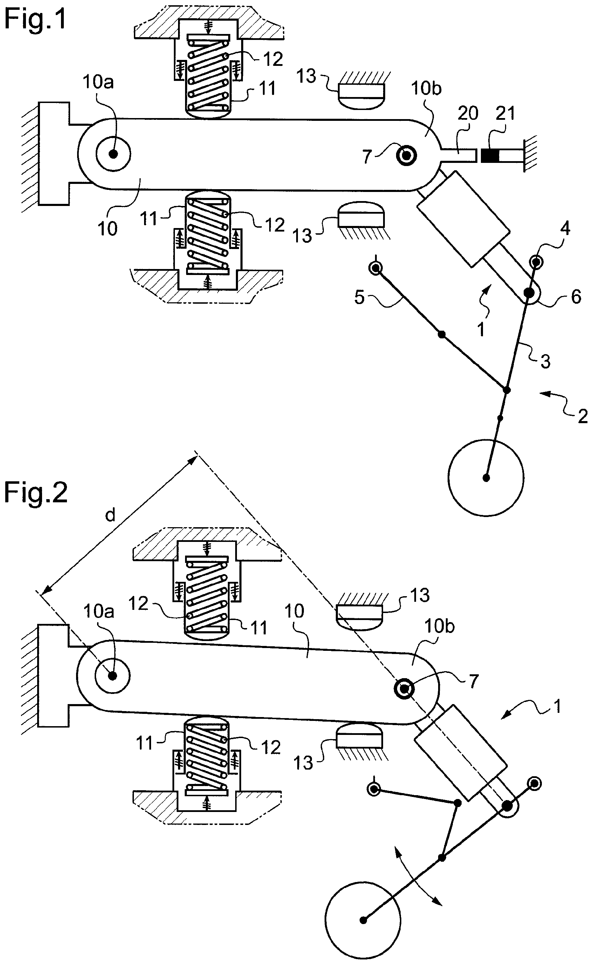

En référence à la figure 1, le dispositif d'attelage de l'invention sert à atteler un actionneur télescopique 1 à une structure d'aéronef, l'actionneur 1 servant à manoeuvrer un atterrisseur 2 dont on distingue le caisson 3 articulé en 4 sur la structure de l'aéronef, et la contrefiche 5 (ici en position alignée et verrouillée pour maintenir l'atterrisseur en position déployée.

L'actionneur 1 est articulé par l'une de ses extrémités 6 au caisson 5 de l'atterrisseur, et par son autre extrémité 7 à la structure de l'aéronef via un dispositif d'attelage selon l'invention.

Ce dispositif d'attelage comporte :
- un levier 10 ayant une extrémité 10a articulée sur la structure de l'aéronef, et une extrémité 10b à laquelle l'extrémité 7 de l'actionneur 1 est articulée ;
- des moyens de précharge comportant ici deux poussoirs 11 disposés de part et d'autre du levier 10 pour agir sur chaque côté du levier 10 et préchargés par des ressorts 12 poussant les poussoirs 11 vers le levier 10 pour définir une position de repos stable de celui-ci de laquelle le levier peut être écarté sous l'effet d'efforts transitant par l'actionneur;
- des butées, ici des butées externes 13 qui définissent des positions de travail du levier 10 de part et d'autre de la position de repos et dans lequel le levier est rappelé lorsque l'actionneur est activé.

Le fonctionnement du dispositif d'attelage selon l'invention est le suivant. Lorsque l'atterrisseur est en position déployée et verrouillée, l'actionneur (qui n'est pas activé) se trouve en parallèle de la contrefiche et constitue un chemin possible de transfert d'efforts venant notamment du sol. Ceci peut être particulièrement dommageable pour la structure de l'aéronef ou pour l'actionneur lui-même. La portion d'effort qu'il est susceptible de transmettre dépend de sa rigidité. En particulier, si l'actionneur est un actionneur électromécanique, il peut présenter, au moins transitoirement, une grande rigidité, même s'il est inactif.

La possibilité offerte selon l'invention au levier 10 de pouvoir pivoter autour de sa position de repos sous l'effet d'un effort transmis par l'actionneur à l'encontre de la précharge induite par les poussoirs 11 diminue la rigidité apparente de l'actionneur et empêche donc celui-ci de transmettre des efforts importants, qui passent donc préférentiellement par la contrefiche 5. Pour faire bouger le levier de sa position de repos, il convient que l'effort remonté par l'actionneur 1 soit supérieur à la précharge induite par les ressorts 12 sur les poussoirs 11. Bien entendu, il convient que les pivotements du leviers restent faibles, et en tout cas ne provoquent pas la venue du levier 10 en position de travail contre l'une des butées 13, ce qui provoquerait une rigidification soudaine et permettrait de nouveau à l'actionneur de faire passer des efforts importants.

Au contraire, lors d'un relevage de l'atterrisseur à l'aide de l'actionneur comme illustré à la figure 2, l'effort généré par l'actionneur (symbolisé par la flèche) est suffisant pour faire venir le levier 10 dans l'une des positions de travail à l'encontre des poussoirs 11. L'actionneur est ainsi en mesure d'exercer un effort important de relevage, qui est transmis à la structure de l'aéronef par le levier 10 appuyé sur la butée 13 correspondante.

Selon un aspect particulier de l'invention, le levier 10 est équipé d'une cible 20 s'étendant en regard d'un détecteur 21 pour détecter la position du levier 10.

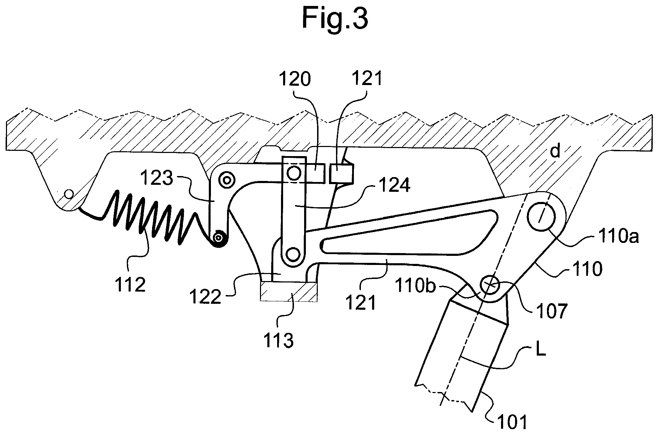

En référence à la figure 3 sur laquelle les éléments similaires à ceux de la figure 1 portent une référence augmentée d'une centaine, le levier 110 du dispositif d'attelage de l'invention comporte une extension 121 finissant par un butoir 122 qui est rappelé contre une butée 113 par un moyen de précharge, comportant en l'occurrence un ressort de traction 112 agissant sur un renvoi 123 articulé sur la structure de l'aéronef, le renvoi étant lui-même attelé au levier 110 par une bielle 124. La position de repos du levier 110 est ainsi définie par la coopération du butoir 122 et de la butée 113.

Ainsi, lorsque l'atterrisseur est en position déployée et que l'actionneur est passif, le bras de levier d institué entre la ligne d'action L de l'actionneur et l'articulation 107 de l'actionneur 101 sur le levier 110 génère un moment tendant à éloigner le levier 110 de sa position de repos à l'encontre du ressort 112 lorsque l'actionneur est soumis à des efforts dus à la déformation de l'atterrisseur sous l'action des efforts provenant du sol.

Au contraire, lorsque l'actionneur est activé, il exerce une traction sur le levier qui, du fait du bras de levier d, tend à confirmer le levier 110 dans sa position de repos, qui constitue donc également une position de travail du levier 110.

La détection de position se fait ici au moyen d'une cible 120 solidaire du renvoi 123 et coopérant avec un capteur fixe 121.

L'invention n'est bien sûr pas limitée à ce qui vient d'être décrit, mais englobe au contraire toute variante entrant dans le cadre défini par les revendications.

En particulier, l'articulation du levier sur la structure de l'aéronef est à entendre au sens large. En effet, la structure de l'aéronef sur lequel le levier est articulé pourra être une partie de fuselage, de voilure, voire de l'atterrisseur lui-même. En effet, le dispositif de l'invention pourra être interposé entre l'atterrisseur et l'actionneur.

En outre, les ressorts 12 peuvent être remplacés par tout autre moyen élastique permettant d'installer une précharge, le cas échéant couplés à des moyens de dissipation pour amortir des mouvements du levier.

## Revendications

1. Dispositif d'attelage d'un actionneur de manoeuvre d'un atterrisseur d'aéronef à une structure d'aéronef comportant
- un levier (10 ; 110) ayant une première extrémité (10a ; 110a) destinée à être articulée sur la structure de l'aéronef et une deuxième extrémité (10b ; 110b) sur laquelle l'actionneur est articulé ;
- des moyens de butée (13 ; 113) pour définir au moins une position de travail du levier lorsque l'actionneur est activé, le levier étant appuyé sur les moyens de butée,
le dispositif d'attelage étant **caractérisé par**
- des moyens de précharge (11, 12 ; 112, 122, 123) agissant sur le levier pour rappeler celui-ci vers une position de repos stable dans laquelle se trouve le levier en l'absence d'effort transitant par l'actionneur.

2. Dispositif selon la revendication 1, dans lequel les moyens de précharge et les moyens de butée sont disposés pour définir des positions de repos et de travail distinctes.

3. Dispositif selon la revendication 2, dans lequel les moyens de précharge comportent deux poussoirs (11, 11) disposés de part et d'autre du levier pour coopérer avec celui-ci et rappeler le levier vers la position de repos située entre deux positions de travail définies de part et d'autre de la position de repos par les moyens de butée (13).

4. Dispositif selon la revendication 1, dans lequel les moyens de précharge rappellent le levier (110) vers les moyens de butée (113) de sorte que la position de repos et la position de travail sont confondues.

5. Dispositif selon l'une quelconque des revendications 1 ou 4, dans lequel les moyens de précharge comprennent un ressort (112) agissant sur un renvoi (123) monté articulé sur la structure de l'aéronef, le renvoi étant attelé au levier (110) au moyen d'une biellette (124) .

6. Aéronef muni d'un dispositif d'attelage d'actionneur de manoeuvre d'aéronef selon l'une des revendications précédentes.

## Patentansprüche

1. Vorrichtung zur Kupplung eines Aktors zur Betätigung eines Luftfahrzeugfahrwerks an eine Luftfahrzeugstruktur, umfassend
- einen Hebel (10; 110), der ein erstes Ende (10a; 110a) hat, das dazu bestimmt ist, an der Struktur des Luftfahrzeugs angelenkt zu werden, sowie ein zweites Ende (10b; 110b), an dem der Aktor angelenkt ist;
- Anschlagmittel (13; 113), um mindestens eine Arbeitsstellung des Hebels zu definieren, wenn der Aktor aktiviert ist, wobei der Hebel auf die Anschlagmittel gestützt ist,
wobei die Kupplungsvorrichtung **gekennzeichnet ist durch**
- Vorspannmittel (11, 12; 112, 122, 123), die auf den Hebel einwirken, um diesen in eine stabile Ruhestellung rückzustellen, in der sich der Hebel befindet, wenn keine Kraft **durch** den Aktor hindurchgeht.

2. Vorrichtung nach Anspruch 1, bei der die Vorspannmittel und die Anschlagmittel so angeordnet sind, dass sie unterschiedliche Ruhe- und Arbeitsstellungen definieren.

3. Vorrichtung nach Anspruch 2, bei der die Vorspannmittel zwei Stößel (11, 11) umfassen, die zu beiden Seiten des Hebels angeordnet sind, um mit diesem zusammenzuwirken und den Hebel in die Ruhestellung rückzustellen, die sich zwischen zwei Arbeitsstellungen befindet, die zu beiden Seiten der Ruhestellung von den Anschlagmitteln (13) definiert sind.

4. Vorrichtung nach Anspruch 1, bei der die Vorspannmittel den Hebel (110) in Richtung der Anschlagmittel (113) rückstellen, so dass die Ruhestellung und die Arbeitsstellung zusammenfallen.

5. Vorrichtung nach einem der Ansprüche 1 oder 4, bei der die Vorspannmittel eine Feder (112) umfassen, die auf ein Vorgelege (123) einwirkt, das an der Struktur des Luftfahrzeugs gelenkig montiert ist, wobei das Vorgelege mittels einer Verbindungsstange (124) an dem Hebel (110) angekoppelt ist.

6. Luftfahrzeug, das mit einer Vorrichtung zur Kupplung eines Luftfahrzeugbetätigungsaktors nach einem der vorhergehenden Ansprüche versehen ist.

## Claims

1. Device for coupling an aircraft undercarriage maneuvering actuator to an aircraft structure, including:
- a lever (10; 110) having a first end (10a; 110a) intended to be articulated to the structure of the aircraft and a second end (10b; 110b) to which the actuator is articulated;
- abutment means (13; 113) to define at least one working position of the lever when the actuator is activated, the lever being pressed onto the abutment means,
the coupling device being **characterized by**:
- preloading means (11, 12; 112, 122, 123) acting on the lever to urge the latter toward a stable rest position in which the lever is located in the absence of force passing through the actuator.

2. Device according to claim 1, wherein the preloading means and the abutment means are disposed to define distinct rest and working positions.

3. Device according to claim 2, wherein the preloading means include two plungers (11, 11) disposed on respective opposite sides of the lever to cooperate therewith and bias the lever toward the rest position situated between two working positions defined on respective opposite sides of the rest position by the abutment means (13).

4. Device according to claim 1, wherein the preloading means bias the lever (110) toward the abutment means (113) so that the rest position and the working position coincide.

5. Device according to either one of claims 1 or 4, wherein the preloading means include a spring (112) acting on a crank (123) articulated to the structure of the aircraft, the crank being coupled to the lever (110) by a connecting rod (124).

6. Aircraft provided with an aircraft maneuvering actuator coupling device according to any one of the preceding claims.
